# EUROPÄISCHE PATENTSCHRIFT

(11) **EP 0 693 177 B1**
(45) Veröffentlichungstag und Bekanntmachung des Hinweises auf die Patenterteilung: **24.11.1999**
(21) Anmeldenummer: 95905519.5
(22) Anmeldetag: 26.01.1995
(51) Int. Cl.: G01N 3/08, G01N 3/06, G01B 11/08

(54) **VERFAHREN ZUR ABSOLUTEN MESSUNG DER REISSFESTIGKEIT VON FASERN**
PROCESS FOR THE ABSOLUTE MEASUREMENT OF THE ULTIMATE TENSILE STRENGTH OF FIBRES
PROCEDE POUR LA MESURE ABSOLUE DE LA RESISTANCE DE FIBRES A LA RUPTURE

(30) Priorität: 10.02.1994 CH 39594
(43) Veröffentlichungstag der Anmeldung: 24.01.1996
(73) Patentinhaber: ZELLWEGER LUWA AG, 8610 Uster (CH)
(72) Erfinder: GLOOR, René, CH-8824 Schönenberg (CH)
(86) Internationale Anmeldenummer: CH9500018
(87) Internationale Veröffentlichungsnummer: WO9522044

(56) Entgegenhaltungen:
- EP-A- 0 393 360
- EP-A- 0 439 803
- US-A- 1 932 682
- US-A- 4 391 153
- US-A- 5 167 150
- TEXTILINDUSTRIE STEIN H: 'Grundsätzliches zur Bündelfestigkeitsprüfung von Fäden und Fasern' Bd. 67, Nr. 8,, Seiten 611 - 618

## Beschreibung

Die Erfindung bezieht sich auf ein Verfahren gemäss dem Oberbegriff des Patentanspruchs 1.

In der Textiltechnik ergibt die Messung der Reissfestigkeit der Textilfasern wichtige Informationen über die zu erwartenden Probleme in der Spinnerei und über die erreichbare Garnfestigkeit.

Es sind bereits klassische Methoden für die Bestimmung der Reissfestigkeit an der Einzelfaser bekannt. Es gibt aber keine breiter eingesetzte Messgeräte für diese Methoden auf dem Markt. Ein Beispiel für eine solche Methode ist in der US-A-5,167,150 SHOFNER ET AL. beschrieben.

Die im Markt verbreiteten Messgeräte basieren auf der Messung der Bündelreissfestigkeit. Die wichtigsten Geräte sind unter den Markennamen Pressley, Stelometer und HVI bekannt.

Bei der Messung des sogenannten Pressley-Indexes wird ein gut ausgekämmtes und parallelisiertes Faserbündel in die Backen zweier Klemmen eingespannt. Zwischen den beiden Klemmen gibt es keinen Abstand. Die über die Klemmen hinaus vorstehenden Fasern werden abgeschnitten. Ein Laufgewicht an einem Lastarm erhöht die Kraft bis das Faserbündel zerrissen ist. Die Reissbelastung kann hierauf auf einem Lastarm abgelesen werden. Das Faserbündel wird anschliessend gewogen. Aus dem Gewicht und der Reissbelastung wird dann der Pressley-Index berechnet.

Das Stelometer funktioniert gleich wie das Pressley-Gerät. Der Abstand der Klemmen beträgt jedoch nicht 0 sondern 0.003 m (1/8 Zoll). Dadurch können auch Aussagen über die Dehnung der Fasern gemacht werden.

Die HVI basieren weitgehend auf der Stelometer-Anordnung. Das Faserbündel kann bei diesen vollautomatischen Messgeräten aus verschiedenen Gründen nicht gewogen werden. Ein Kraftsensor misst im Zugversuch die maximale Reisskraft an dieser Stelle. Mit einem zusätzlichen Sensor wird der Ort des konstanten Massepunktes innerhalb des Faserbartes festgestellt. Diese Massepunktmessung ergibt keine absolute Angabe über die Faseranzahl, das Fasergewicht oder den Faserquerschnitt. Mit einer Eichbaumwolle, deren Reisskraft in g/tex (Gramm pro tex/gemäss DIN Normen 60905, 60910) bekannt ist, wird der konstante Massepunkt geeicht. Die Streuung der Eichbaumwolle und die Präzision bei der Messung der Sollwerte beeinflussen die Streuung zwischen den Messgeräten und die Reproduzierbarkeit der einzelnen Messgeräte. Zwischen der Detektion des Massepunktes und der eigentlichen Reissfestigkeitsmessung wird der Faserbart bewegt. Dabei kann sich der Faserbart je nach den Fasereigenschaften verändern, was zu erhöhten Streuungen infolge Massepunktabweichungen führt. Die Eichung stellt einen erheblichen Zeitaufwand dar, der bei diesen auf Geschwindigkeit getrimmten Messgeräten ins Gewicht fällt. Die Funktion der HVI ist von diversen Messgeräten her bereits bekannt.

Bei allen bekannten Verfahren zur Messung der Bündelreissfestigkeit wird der tatsächlich gerissene Faserquerschnitt nur indirekt angenähert. Dadurch entstehen grosse Streuungen der Messresultate. Ein weiterer Nachteil besteht darin, dass die Kräuselung der Fasern nicht beseitigt wird, d.h. der Zeitpunkt des Faserbruches wird stark durch die individuelle Kräuseluung jeder Faser beeinflusst. Die gemessene Bündelreissfesigkeit hängt damit stark mit der jeweiligen Kräuselung zusammen.

Aus einem Artikel von H. Stein in der Zeitschrift TEXTILINDUSTRIE Bd. 67, Nr. 8, August 1965, Seiten 611 - 618, mit dem Titel: "Grundsätzliches zur Bündelfestigkeitsprüfung von Fäden und Fasern", sind Vorrichtungen zur Fadenprüfung bekannt, in denen Fäden zu sogenannten Fadenharfen angeordnet werden, so dass sie gemeinsam einem Zugversuch unterworfen werden können, aus dem Kraft-Dehnungs-Eigenschaften ermittelt werden.

Hier will die Erfindung Abhilfe schaffen. Der Erfindung liegt die Aufgabe zugrunde, ein Verfahren zur Messung der Reissfestigkeit von Fasern, insbesondere von Textilfasern, zu schaffen, welches auf einem absoluten Messverfahren beruht.

Die Erfindung löst die gestellte Aufgabe mit einem Verfahren, welches die Merkmale des Anspruchs 1 aufweist.

Das erfindungsgemässe Verfahren beseitigt die Nachteile des Standes der Technik und zeichnet sich durch eine absolute Messmethode aus, die ohne den Einsatz von Eichbaumwolle auskommt.

Weitere vorteilhafte Ausgestaltungen der Erfindung sind in den abhängigen Ansprüchen gekennzeichnet.

Die Erfindung und Weiterbildungen der Erfindung werden im folgenden anhand der teilweise schematischen Darstellungen eines Ausführungsbeispiels noch näher erläutert.

Es zeigt:
Fig. 1 ein schematischer Längsschnitt durch eine Vorrichtung zur Durchführung des erfindungsgemässen Verfahrens mit offenem Reissmodul;
Fig. 2 ein schematischer Längsschnitt durch eine Vorrichtung zur Durchführung des erfindungsgemässen Verfahrens mit geschlossenem Reissmodul;
Fig. 3 einen vergrösserten Ausschnitt der Fig. 2;
Fig. 4 einen Querschnitt längs der Linie IV-IV durch die Fig. 2 vor dem Reissen; und
Fig. 5 ein Querschnitt längs der Linie IV-IV durch die Fig. 2 nach dem Reissen.

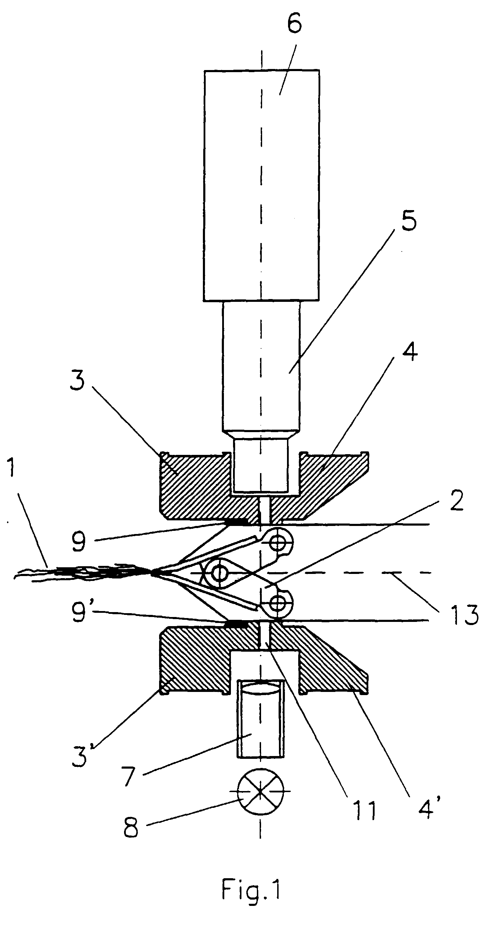

Anhand der Fig. 1 - 5 wird das erfindungsgemässe Verfahren nachstehend im Detail erörtert.

Zur Vorbereitung der Faserprobe wird zuerst mit einem bekannten Auflösemodul, z.B. der EP-B1 393 360 GLOOR und einem unter dem Markennamen "Fibroliner" der Firma Siegfried Peyer AG bekannten Gerät zum Ausrichten von Fasern (EP-B1 294 571 VÖLLM) zu einem endengeordneten, repräsentativen, dünnen, einlagigen Faserbart aufbereitet.

Wie in Fig. 1 gezeigt, wird der endengeordnete Faserbart 1, der von der Zange 2 gehalten wird, vom Nadelbett des "Fibroliners" zum offenen Reissmodul 3, 3', 4, 4' transportiert. Sobald die Zange 2 das Reissmodul 3, 3', 4, 4' verlässt, beginnen sich die Zangenbacken 3, 4 und 3', 4' automatisch zu schliessen. Die Streckeinrichtung 9, z.B. in Form einer Bürste, eines Filzes, porösen Kunststoffes, Leders oder Gewebes, entfernt die Kräuselung jeder Faser, indem sie die einzelnen Fasern des Faserbartes 1 mit einer minimalen Vorspannung versieht. Wenn der Faserbart 1 die Reissposition erreicht hat, die bei einer fixen Länge oder in Abhängigkeit der Längenverteilung definiert wird, werden die Zangenbacken 3, 4 und 3', 4' mit einer Klemmkraft von ca. 400 N beaufschlagt.

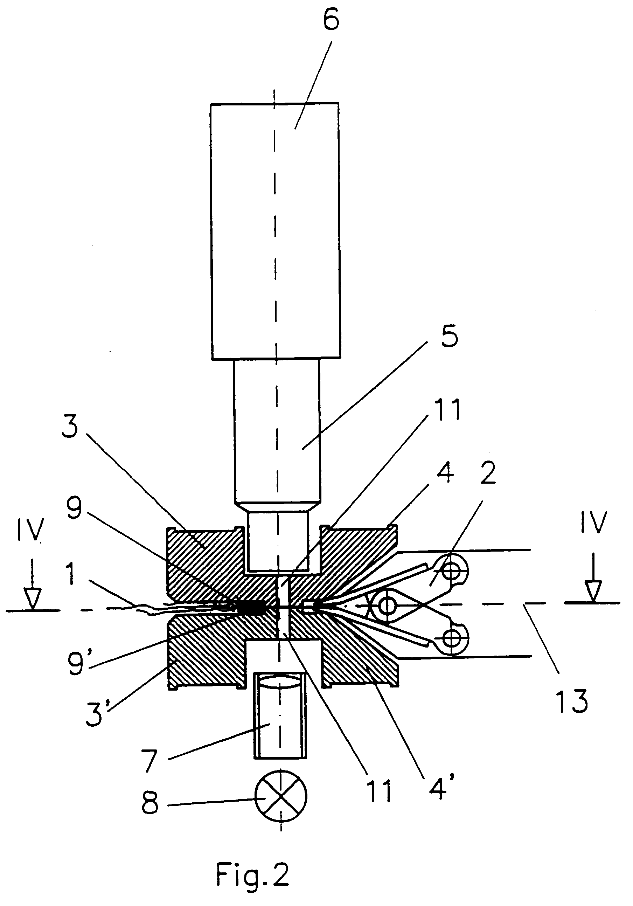

Wie in Fig. 2 gezeigt ist der Faserbart 1 nun für die Reisskraftmessung bereit. Um die Dicke der einzelnen Fasern zu messen ist ein Beleuchtungsobjekt 7 mit Beleuchtung 8, ein Abbildungsobjektiv 5, sowie eine CCD-Kamera 6 vorgesehen. Diese Abbildungs-Einheit 5, 6, 7, 8 bewegt sich als Ganzes in einer Ebene parallel zur Faserebene 13, welche durch die nebeneinander liegenden Fasern gebildet ist, quer zu den Fasern und misst die Dicke jeder einzelnen Faser des Faserbartes 1. Der Abstand 11 zwischen den Zangenbacken 3, 4 und 3', 4' beträgt typischerweise 0,003 m (1/8 Zoll).

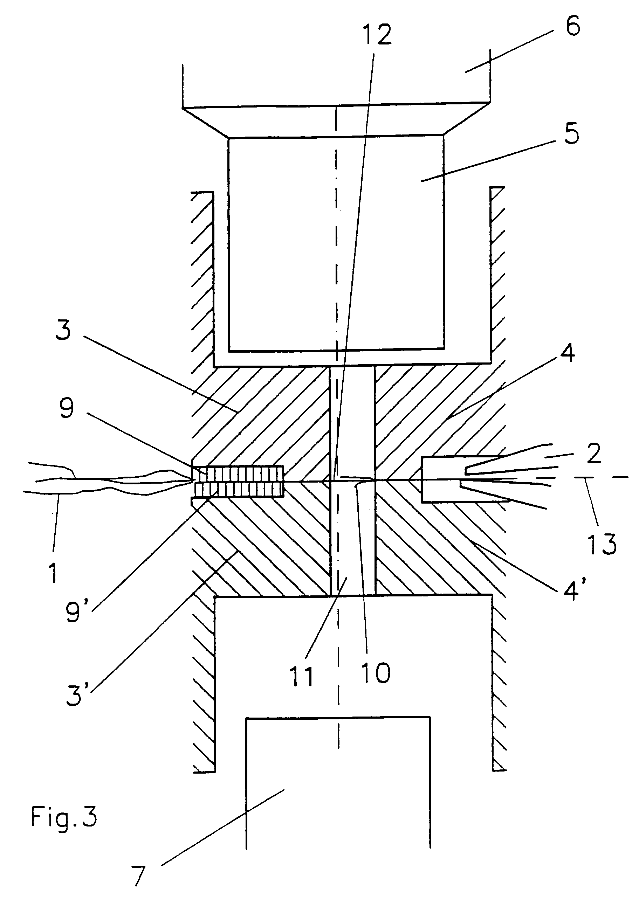

Wie in Fig. 3 dargestellt, erfolgt die Messung der Faserdicke möglichst nahe bei der Zangenbacke 3, 3'. Zwischen den Zangenbacken 3, 4 und 3', 4' befinden sich zwei verschiedene Klassen von Fasern. Die eine Klasse 12 besteht aus denjenigen Fasern, die durch beide Zangenbacken 3, 4 und 3', 4' geklemmt sind und bei der Reisskraftmessung zerrissen werden. Die andere Klasse 10 umfasst diejenigen Fasern, welche innerhalb des Abstandes 11 enden und nur durch die Zangenbacken 4, 4' festgehalten sind.

Diese Klasse 10 von Fasern hat keinen Einfluss auf die Reisskraftmessung. Dank der Endenordnung des Faserbartes 1 treten diese eindeutigen Verhältnisse auf. Erfolgt nun die Dickenmessung so nahe wie möglich an der Zangenbacke 3, 3', so kann die Anzahl und der Querschnitt der zerrissenen Fasern sehr genau ermittelt werden.

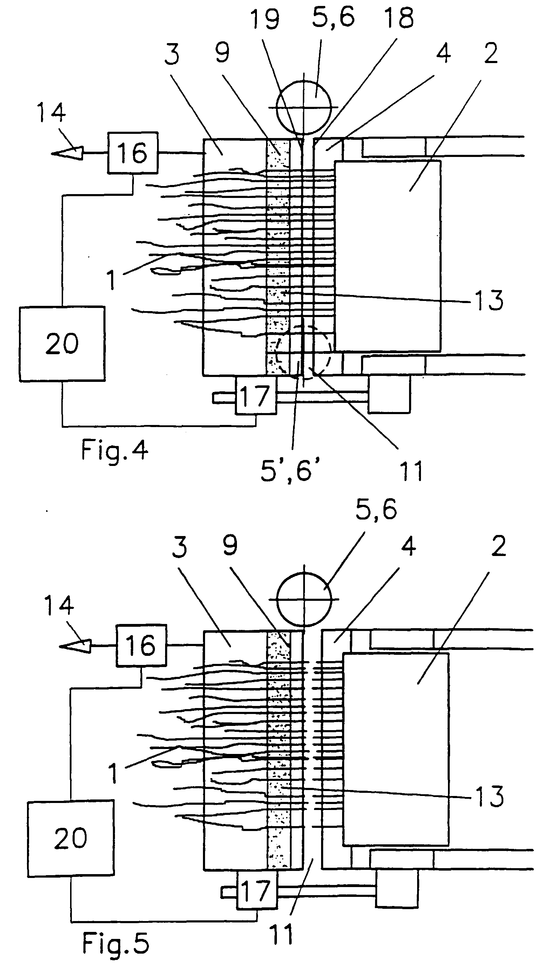

Fig. 4 zeigt die kräuselfrei im geschlossenen Reissmodul 3, 4 eingelegten Fasern des Faserbartes 1 und die Bewegung der CCD-Kamera 6 mit Abbildungsobjektiv 5 von der Ausgangsstellung quer zu den einzelnen Fasern in die Extremstellung 5', 6'. Die Zangenbacke 3 (welche mit dem über der Zeichenebene liegenden Gegenstück 3' die Fasern klemmt) wird nun mit konstanter Geschwindigkeit in Richtung des Pfeils 14 auseinandergefahren.

Der eingebaute Kraftsensor 16 registriert die auftretende Zugkraft und ein Wegsensor 17 misst den zurückgelegten Weg der Zangenbacke 3.

Fig. 5 zeigt den zerrissenen Faserbart 1 bevor er aus dem Reissmodul 3, 4 entfernt wird. Der Verlauf der gemessenen Zugkraftkurve und die Resultate der Dickenmessung ergeben eine maximale Reisszugkraft in der Dimension [N]. Dieser Wert kann mit den entsprechenden Konstanten im Rechner 20 auf die Dimension [g/tex] umgerechnet werden.

Durch die korrekte Erfassung der Kraft, des Faserquerschnittes und der Elimination der Faser-Kräuselung kann die Reissfestigkeit ohne Verwendung einer Eichbaumwolle in absoluter Weise gemessen werden.

Die Resultate der Dickenmessung sind natürlich nicht nur für die Reissfestigkeitsmessung verwendbar. Die Faserfeinheit ist ein eigenständiger, wichtiger Parameter in der Textiltechnik. Das erfindungsgemässe Verfahren hat also den weiteren Vorteil, dass gleichzeitig auch andere Parameter mit hoher Präzision gemessen werden können, wie z.B. die Faserfeinheit, der Reifegrad, die Helix.

## Patentansprüche

1. Verfahren zur Messung der Reissfestigkeit von Fasern, insbesondere von Textilfasern, gekennzeichnet durch folgende Schritte:
A) die zu messenden Fasern oder Teilbereiche solcher Fasern werden zu einem einlagigen, planaren Faserbart (1) aufbereitet,
B) der Faserbart (1) wird in der Faserebene (13), längs zweier paralleler und zur Faserrichtung senkrecht verlaufender Linien (18, 19) festgeklemmt, die in Faserrichtung einen vorgegebenen Abstand aufweisen,
C) der Querschnitt der zwischen beiden Linien (18, 19) beidseitig festgeklemmten Fasern, wird einzeln bestimmt und zu einem Gesamtquerschnitt summiert,
D) der Faserbart (1) wird durch Anwendung einer Kraft in der Faserebene (13) in Faserrichtung zwischen den beiden Linien bis zum Reissen auseinandergezogen und
E) aus der auftretenden Zugkraft und dem ermittelten Gesamtquerschnitt wird die Reissfestigkeit bestimmt.

2. Verfahren nach Anspruch 1, dadruch gekennzeichnet, dass die Fasern des Faserbartes (1) vor dem Auseinanderziehen mit einer minimalen Vorspannung versehen werden, so dass sie kräuselfrei sind.

3. Verfahren nach Anspruch 1 oder 2, dadurch gekennzeichnet, dass für die Bestimmung des Querschnitts der Fasern, der Faserbart (1) senkrecht zur Faserebene in ein Abbildungsobjektiv (5) abgebildet wird, und dass das Bild, das durch das Abbildungsobjektiv erzeugt wird, einer CCD-Kamera (6) zugeführt wird.

4. Verfahren nach Anspruch 3, dadurch gekennzeichnet, dass die CCD-Kamera (6) schrittweise quer zu den einzelnen Fasern über die gesamte Breite des Faserbartes bewegt wird.

5. Verfahren nach einem der Ansprüche 1 - 4, dadurch gekennzeichnet, dass die Fasern des Faserbartes (1) mittels Zangenbacken (3, 4, 3', 4') längs der Linien (18, 19) festgeklemmt werden.

6. Verfahren nach Anspruch 5, dadurch gekennzeichnet, dass die Bestimmung des Querschnitts der Fasern möglichst nahe längs der Linie (19) der Zangenbacke (3, 3') erfolgt, welche nur beidseitig festgeklemmte Fasern festklemmt.

7. Verfahren nach einem der Ansprüche 5 oder 6, dadurch gekennzeichnet, dass der Abstand der Zangenbacken (3, 3', 4, 4') zwischen 1mm und 5mm, vorzugsweise aber zwischen 2,5mm und 3,5mm liegt.

8. Vorrichtung zur Durchführung des Verfahrens nach einem der Ansprüche 1 - 7, gekennzeichnet, durch
a) Zangenbacken (3, 3', 4, 4'), zwischen welchen ein einlagiger, planarer Faserbart (1) in der Faserebene (13) senkrecht zur Faserrichtung, längs zweier paralleler, einen vorgegebenen Abstand aufweisenden Linien (18, 19) festklemmbar ist und welche in Faserrichtung voneinander weg bewegbar angeordnet sind,
b) ein Beleuchtungsobjektiv (7) mit Beleuchtung (8) und einem quer über die Faserebene verschiebbar angeordneten Abbildungsobjektiv (5),
c) eine CCD-Kamera (6), welcher das durch das Abbildungsobjektiv (5) erzeugte Bild zuführbar ist,
d) einen zur Messung der zwischen den Zangenbacken (3, 3', 4, 4') auftretenden Reisskraft dienenden Kraftsensor (16) und
e) einen Rechner (20) zur Berechnung der Reissfestigkeit, der an den Kraftsensor angeschlossen ist.

## Claims

1. Method for measuring the tearing strength of fibres, especially of textile fibres, characterized by the following steps:
A) the fibres to be measured or part regions of such fibres are treated to form a single-layer planar fibre tuft (1),
B) the fibre tuft (1) is clamped in the fibre plane (13) along two parallel lines (18, 19) which run perpendicularly to the fibre direction and have a predetermined clearance in the fibre direction,
C) the cross-section of the fibres clamped on both sides between the two lines (18, 19) is determined individually and summed to form a total cross-section,
D) the fibre tuft (1) is pulled apart to tear by the application of a force in the fibre plane (13) in the fibre direction, between the two lines, and
E) the tearing strength is determined from the tensile force occurring and the total cross-section determined.

2. Method according to Claim 1, characterized in that, before the pulling apart, the fibres of the fibre tuft (1) are provided with a minimum pretension, so that they are free of crimping.

3. Method according to Claim 1 or 2, characterized in that for the determination of the cross-section of the fibres, the fibre tuft (1) is imaged perpendicular to the fibre plane into an imaging objective (5), and in that the image generated by the imaging objective is fed to a CCD camera (6).

4. Method according to Claim 3, characterized in that the CCD camera (6) is moved in steps transversely to the individual fibres over the entire width of the fibre tuft.

5. Method according to one of Claims 1 to 4, characterized in that the fibres of the fibre tuft (1) are clamped along the lines (18, 19) by means of gripper jaws (3, 4, 3', 4').

6. Method according to Claim 5, characterized in that the determination of the cross-section of the fibres takes place as near as possible along the line (19) of the gripper jaw (3, 3') which clamps only fibres clamped on both sides.

7. Method according to one of Claims 5 or 6, characterized in that the clearance between the gripper jaws (3, 3', 4, 4') is between 1 mm and 5 mm, but preferably between 2.5 mm and 3.5 mm.

8. Appliance for carrying out the method according to one of Claims 1 to 7, characterized by
a) gripper jaws (3, 3',4, 4') between which a single-layer planar fibre tuft (1) can be clamped in the fibre plane (13) perpendicularly to the fibre direction along two parallel lines (18, 19) having a predetermined clearance and which are arranged such that they can be moved away from one another in the fibre direction,
b) a lighting objective (7) with lighting (8) and an imaging objective (5), arranged so as to be displaceable transversely over the fibre plane,
c) a CCD camera (6), to which the image generated by the imaging objective (5) can be fed,
d) a force sensor (16) serving for measuring the tearing force occurring between the gripper jaws (3, 3',4, 4'), and
e) a computer (20) which is connected to the force sensor and is intended for calculating the tearing strength.

## Revendications

1. Procédé de mesure de la résistance à la rupture de fibres, notamment de fibres textiles, caractérisé par les étapes suivantes :
A) les fibres à mesurer ou des zones partielles de telles fibres sont préparées en une barbe de fibres plane (1) en une couche,
B) la barbe de fibres (1) est serrée dans le plan de fibres (13), le long de deux lignes parallèles (18, 19) s'étendant perpendiculairement à la direction des fibres, qui présentent dans la direction des fibres un écart prédéterminé,
C) la section transversale des fibres serrées entre les deux lignes (18, 19) des deux côtés est déterminée individuellement et est additionnée pour obtenir une section transversale d'ensemble,
D) la barbe de fibres (1), par l'application d'une force dans le plan de fibres (13) dans la direction des fibres entre les deux lignes est étirée jusqu'à la rupture et
E) à partir de la force de traction produite et de la section transversale d'ensemble obtenu, la résistance à la rupture est déterminée.

2. Procédé selon la revendication 1, caractérisé en ce que les fibres de la barbe de fibres (1), avant la séparation en tirant, sont pourvues d'une précontrainte minimale pour qu'elles soient sans frisure.

3. Procédé selon la revendication 1 ou 2, caractérisé en ce que pour la détermination de la section transversale des fibres, la barbe de fibres (1) est représentée perpendiculairement au plan des fibres dans un objectif de reproduction (5) et en ce que l'image produite par l'objectif de reproduction est amenée à une caméra CCD (6).

4. Procédé selon la revendication 3, caractérisé en ce que la caméra CCD (6) est déplacée pas-à-pas transversalement aux différentes fibres sur toute la largeur de la barbe de fibres.

5. Procédé selon l'une des revendications 1-4, caractérisé en ce que les fibres de la barbe de fibres (1) sont serrées au moyen de mâchoires de pince (3, 4, 3', 4') le long des lignes (18, 19).

6. Procédé selon la revendication 5, caractérisé en ce que la détermination de la section transversale des fibres a lieu le plus proche possible le long de la ligne (19) de la mâchoire de pince (3, 3') qui serre seulement des fibres serrées des deux côtés.

7. Procédé selon l'une des revendications 5 ou 6, caractérisé en ce que l'écart des mâchoires de pince (3, 3', 4, 4') se situe entre 1 mm et 5 mm, cependant de préférence entre 2,5 mm et 3,5 mm.

8. Dispositif pour la mise en oeuvre du procédé selon les revendications 1-7, caractérisé par
a) des mâchoires de pince (3, 3', 4, 4') entre lesquelles peut être serrée une barbe de fibres plane (1) en une couche dans le plan des fibres (13) perpendiculairement à la direction des fibres, le long de deux lignes parallèles (18, 19) présentant un écart prédéterminé et qui sont disposées dans la direction des fibres d'une manière déplaçable au loin l'une de l'autre,
b) un objectif d'éclairage (7) avec un éclairage (8) et un objectif de reproduction (5) disposé d'une manière déplaçable transversalement sur le plan des fibres,
c) une caméra CCD (6) à laquelle peut être amenée l'image produite par l'objectif de reproduction (5),
d) un capteur de forces (16) servant à mesurer la force de rupture produite entre les mâchoires de pince (3, 3', 4, 4') et
e) un calculateur (20) pour calculer la résistance à la rupture, qui est raccordé au capteur de forces.
